# EUROPEAN PATENT SPECIFICATION

(11) **EP 3 901 078 B1**
(45) Date of publication and mention of the grant of the patent: **08.11.2023**
(21) Application number: 20213503.4
(22) Date of filing: 11.12.2020
(51) Int. Cl.: B66B 1/34

(54) **SOFTWARE OR CONFIGURATION UPGRADE TO ELEVATOR COMPONENTS USING COGNITIVE SERVICE**
SOFTWARE- ODER KONFIGURATIONS-UPGRADE FÜR AUFZUGSKOMPONENTEN UNTER VERWENDUNG EINES KOGNITIVEN DIENSTES
MISE À NIVEAU DE LOGICIEL OU DE CONFIGURATION POUR DES COMPOSANTS D'ASCENSEUR À L'AIDE D'UN SERVICE COGNITIF

(30) Priority: 23.04.2020 IN 202011017452
(43) Date of publication of application: 27.10.2021
(73) Proprietor: Otis Elevator Company, Farmington, Connecticut 06032 (US)
(72) Inventor: MARPU, Appalaraju, Hyderabad,Telangana 500081 (IN)
(74) Representative: Dehns

(56) References cited:
- JP-A- 2007 001 734
- JP-A- 2008 105 763
- JP-A- 2008 273 730
- JP-A- 2016 190 720

## Description

### BACKGROUND

The subject matter disclosed herein relates generally to the field of conveyance systems, and specifically to a method and apparatus for updating software on conveyance systems.

Conveyance systems such as, for example, elevator systems, escalator systems, and moving walkways typically require a technician onsite for software updates. JP 2016190720A discloses an elevator control device capable of updating a program for operation control by remote control. The elevator control device uses a lighting sensor to determine the service state of the elevator. The elevator control device uses a load sensor to determine the service state of the elevator. JP 2008273730A discloses a program updating method for an elevator that can rewrite a program from a remote location. The rewrite is performed when several conditions are satisfied including if it is confirmed by a camera in the car that there is no person. JP 2007001734A discloses an elevator control program rewriting device in which a worker checks for people in the elevator car using a security camera, and then confirms that no person is on board the car with a call device.

### BRIEF SUMMARY

According to an aspect of the invention, a method of updating software on a conveyance system comprising a conveyance apparatus is provided according to claim 1.

Further embodiments may include that the data is transmitted to the cognitive service via a cloud computing network or directly to the cognitive service.

Further embodiments may include: detecting data using the first detection device, determining that an object is located in or on the conveyance apparatus.

Further embodiments may include: ceasing operation of the conveyance apparatus prior to updating the software on the conveyance system.

Further embodiments may include that the conveyance system is an elevator system and the conveyance apparatus is an elevator car.

Further embodiments may include that the software update request is received from a software repository configured to generate the software update request automatically.

Further embodiments may include that the software update request is received from an application installed on a computing device, wherein a remote elevator mechanic entered the software update request using the application.

Further embodiments may include: delaying updating the software on the conveyance system, when it is determined that there is at least one individual located in or on the conveyance apparatus.

According to another aspect of the invention, a software updating system for updating software on a conveyance system comprising a conveyance apparatus is provided according to claim 8.

Further embodiments may include that the first detection device comprises a floor pressure sensor.

Further embodiments may include that the conveyance system is an elevator system and the conveyance apparatus is an elevator car.

Further embodiments may include that the software on the conveyance system is delayed when it is determined that there is at least one individual located in or on the conveyance apparatus.

According to an another aspect of the invention, a computer program product embodied on a non-transitory computer readable medium is provided according to claim 11.

Technical effects of embodiments of the present disclosure include utilizing a sensing system to detect whether an individual is present on or in a conveyance apparatus of a conveyance system prior to updating software for the conveyance system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a schematic view of a software updating system, in accordance with an embodiment of the disclosure; and
FIG. 3 is a flow chart of method of updating software on a conveyance system, in accordance with an embodiment of the disclosure.

### DETAILED DESCRIPTION

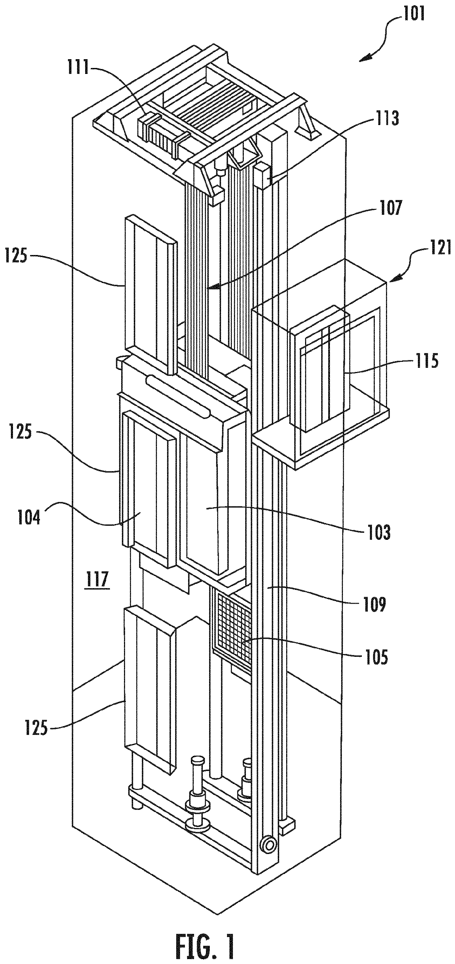

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, moving walkways, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system or a moving walkway.

The elevator system 101 also includes one or more elevator doors 104. The elevator door 104 may be integrally attached to the elevator car 103 and/or the elevator door 104 may be located on a landing 125 of the elevator system 101. Embodiments disclosed herein may be applicable to both an elevator door 104 integrally attached to the elevator car 103 and/or an elevator door 104 located on a landing 125 of the elevator system 101. The elevator door 104 opens to allow passengers to enter and exit the elevator car 103.

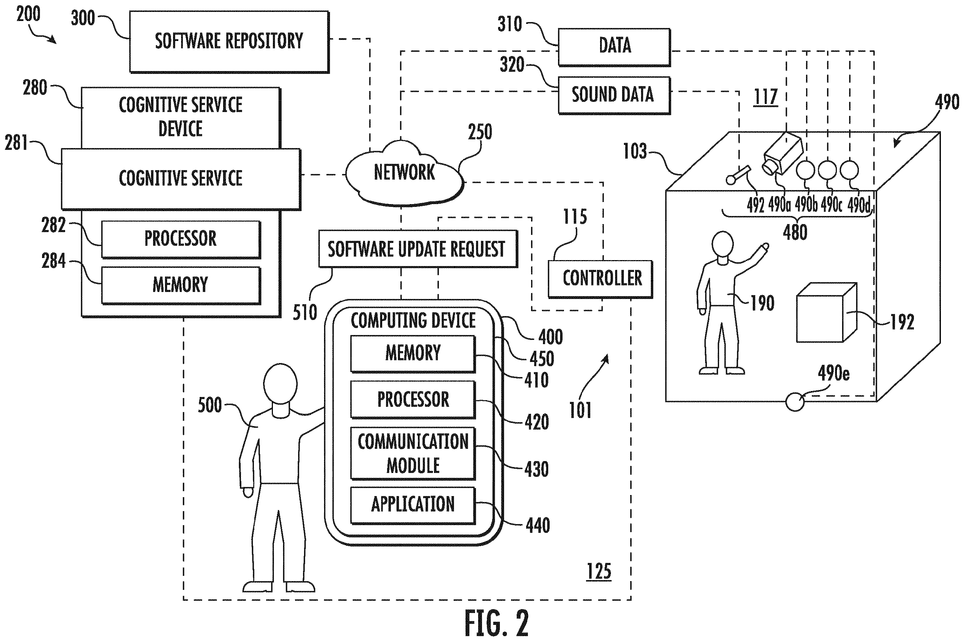

Referring now to FIG. 2, with continued reference to FIG. 1, a software updating system 200 is illustrated in accordance with an embodiment of the present disclosure. The software updating system 200 may include computing device 400. The computing device 400 may belong to a remote elevator mechanic 500, such as, for example, an elevator mechanic/technician that is not located onsite at an elevator system 101 but is working remotely on an elevator system 101. In one embodiment, the remote elevator mechanic 500 may be located proximate or in the vicinity of the elevator system 101, but not directly connected to it or in an elevator car 103. The computing device 400 may be a desktop computing device or a mobile computing device that is typically carried by a person, such as, for example a smart phone, cellular phone, PDA, smart watch, tablet, laptop, or similar device known to one of skill in the art. The computing device 400 may include a display device 450. The computing device 400 may include a processor 420, memory 410, a communication module 430, and an application 440, as shown in FIG. 2.

The processor 420 can be any type or combination of computer processors, such as a microprocessor, microcontroller, digital signal processor, application specific integrated circuit, programmable logic device, and/or field programmable gate array. The memory 410 is an example of a non-transitory computer readable storage medium tangibly embodied in the computing device 400 including executable instructions stored therein, for instance, as firmware. The communication module 430 may implement one or more communication protocols, such as, for example, short-range wireless protocols and long-range wireless protocols. The communication module 430 may be in communication with at least one of the cloud computing network 250, the cognitive service device 280, or the controller 115 of the elevator system. In an embodiment, the communication module 430 may be in communication with the cognitive service device 280 through the cloud computing network 250 and the elevator system 101 through the cloud computing network 250 using at least one of short-range wireless protocols or long-range wireless protocols. Short-range wireless protocols may include but are not limited to Bluetooth, Wi-Fi, HaLow (801.1 1ah), zWave, ZigBee, or Wireless M-Bus. Long-range wireless protocols 204 may include but are not limited to cellular, LTE (NB-IoT, CAT M1), LoRa, satellite, Ingenu, or SigFox.

The remote elevator mechanic 500 may be able to view a current software edition of the elevator system 101 using an application 440 of the computing device 400. For example, the application 440 may remotely connect to the controller 115 of the elevator system 101 to view the current software edition for the elevator system 101. There may be different types of software utilized for different kinds of controllers or subsystems in an elevator system 100. Each controller or subsystem may have an application layer so that application type of software version can be viewed remotely. The remote elevator mechanic 500 may make a determination that a software update is required for the elevator system 101 and then the remote elevator mechanic 500 can transmit a software update request 510 to the controller 115 using the application 440. The software update request 510 may be transmitted through the cloud computing network 250 or directly to the controller 115. Software updates and software files may be stored on a software repository 300 located in or connected to the cloud computing network 250. Whenever a software update is required, the software files for the software update may be transmitted from the software repository 300. Alternatively, the software update request 510 may be transmitted automatically from the software repository 300 based on a schedule that is established manually or using machine learning and performance data from the elevator system 101. Alternatively, machine learning may automatically trigger software updates from the software repository based on software file availibity and an idle situation in an elevator.

Prior to updating the software on the elevator system 101, there is a need to ensure that no individuals 190 are located within the elevator car 103. Since the remote elevator mechanic 500 is not located onsite with the elevator system 101 or is not necessarily proximate or within viewing distance of the elevator car 103, the remote elevator mechanic 500 cannot physically look into the elevator car 103 in-person. Embodiments, described herein depict a system and apparatus for determining whether the elevator car 103 is free of individuals 190 and whether the software updating process can begin.

As illustrated in FIG. 2, the software updating system 200 comprises a sensing system 480 configured to detect whether an individual 190 is located within and/or on a conveyance apparatus. In the embodiment illustrated in FIG. 2, the conveyance apparatus is an elevator car 103 of an elevator system 101 (see FIG. 1).

The sensing system 480 may be configured to differentiate between individuals 190 and objects 192 in the elevator car 103. It should be appreciated that, although particular systems are separately defined in the schematic block diagrams, each or any of the systems may be otherwise combined or separated via hardware and/or software. The sensing system 480 is composed of a first detection device 490 and a microphone 492. The first detection device 490 is configured to collect data 310 and transmit the data 310 to a cognitive service 281 via the cloud computing network 250.

The cognitive service 281 may be installed on a cognitive service device 280. In one embodiment, the cognitive service device 280 may be located local to the elevator system 101 and in direct communication with the controller 115. In another embodiment, the cognitive service device 280 may be remote to the elevator system 101 and in direct communication with the controller 115 through the cloud computing network 250. The cognitive service device 280 may be a computing device, such as, for example, a desktop, a cloud based computer, and/or a cloud based artificial intelligence (AI) computing system. The cognitive service device 280 may include a processor 282 and an associated memory 284 comprising computer-executable instructions that, when executed by the processor 282, cause the processor 282 to perform various operations. The processor 282 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 284 may be but is not limited to a random access memory (RAM), read only memory (ROM), or other electronic, optical, magnetic or any other computer readable medium.

The first detection device 490 comprises at least one of a camera 490a, a depth sensing device 490b, a RADAR device 490c, a thermal detection device 490d or a floor pressure sensor 290e. The people counter system 279 may utilize the camera 490a to detect an individual 190 and/or an object 192 within the elevator car 103. The camera 490a may be configured to capture an image or video within the elevator car 103. The camera 490a generates images and/or video as data 310. The depth sensing device 490b may be a 2-D, 3-D or other depth/distance detecting camera that utilizes detected distance to an object 192 and/or individuals 190 to detect an individual 190 and/or an object 192 within the elevator car 103. The depth sensing device 490b generates depth maps as data 310. The RADAR device 490c may utilize radio waves to detect an individual 190 and/or an object 192 within the elevator car 103. The RADAR device 490c generates RADAR signals as data 310. The thermal detection device 490d may be an infrared or other heat sensing camera that utilizes detected temperature to detect an individual 190 and/or an object 192 within the elevator car 103. The thermal detection device 490d generates thermal images as data 310. The floor pressure sensor 490e may be one or more pressure sensors located in the floor of an elevator car 103 that utilizes pressure data on the floor to detect an individual 190 and/or an object 192 within the elevator car 103. The floor pressure sensor 490e generates a pressure map as data 310. As may be appreciated by one of skill in the art, in addition to the stated methods, additional methods may exist to detect individuals 190 and objects 192, thus one or any combination of these methods may be used to determine the presence of individuals 190 or object in an elevator car 103.

The data 310 captured by the first detection device 290 may be transmitted as raw data to the cognitive service 281 via the cloud computing network 250 and the cognitive service 281 may be configured to analyze the data 310 to determine whether an individual 190 and/or an object 192 is within the elevator car 103. The cognitive service 281 is configured to detect an individual 190 and/or an object 192 within the elevator car 103 through image recognition, video analytics, neural networks, machine learning, deep learning, artificial intelligence, speech recognition, computer vision, video indexer or any other known method to one of skill in the arm.

The sensing system 480 may additionally include a microphone 492 configured to capture sound data 320 within the elevator car 103. The sound data 320 may be transmitted to the cognitive service 281 via the cloud computing network 250 and the cognitive service 281 may be configured to analyze the data 310 to determine whether an individual 190 and/or an object 192 is within the elevator car 103. The cognitive service 281 is configured to detect an individual 190 and/or an object 192 within the elevator car 103 through voice recognition.

In an embodiment, the first detection device 490 is located within the elevator car 103. The first detection device 490 may be configured to process the data 310 using a processor (not shown for simplicity) of the first detection device 490 prior to transmitting to the cognitive service 281 through a communication module (not shown for simplicity). This processing is known as edge processing. Alternatively, the communication module (not shown for simplicity) of the first detection device 490 may be configured to transmit as raw data (i.e., pre-processed data) the data 310 to the cognitive service 281 and then the cognitive service 281 may process the data 310. The communication module (not shown for simplicity) of the first detection device 490 may be in communication with the cognitive service 281 through the cloud computing network 250.

In an embodiment, the microphone 492 is located within the elevator car 103. The microphone 492 may be configured to process the sound data 320 using a processor (not shown for simplicity) of the microphone 492 prior to transmitting to the cognitive service 281 through a communication module (not shown for simplicity). This processing is known as edge processing. Alternatively, the communication module (not shown for simplicity) of the microphone 492 may be configured to transmit as raw data (i.e., pre-processed data) the sound data 320 to the cognitive service 281 and then the cognitive service 281 may process the sound data 320. The communication module (not shown for simplicity) of the microphone 492 may be in communication with the cognitive service 281 through the cloud computing network 250.

The cognitive service 281 utilizes the sound data 320 together with the data 310 of the first detection device 490 to determine whether an individual 190 and/or an object 192 is within the elevator car 103.

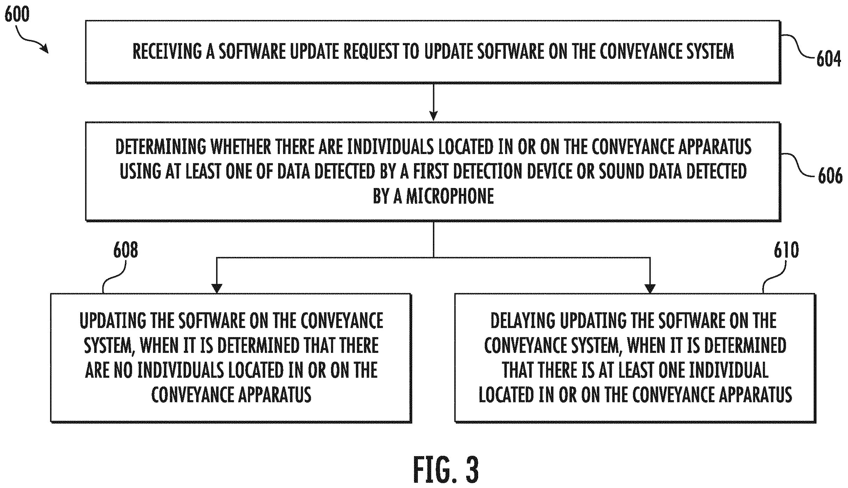

Referring now to FIG. 3, with continued reference to FIGS. 1-2, a flow chart of method 600 for updating software of a conveyance apparatus is illustrated, in accordance with an embodiment of the disclosure. In an embodiment, the method 600 is performed by the software updating system 200 of FIG. 2. The conveyance system comprises a conveyance apparatus. In an embodiment, the conveyance system is an elevator system 101 and the conveyance apparatus is an elevator car 103

At block 604, a software update request 510 to update software on the conveyance system is received. The software update request 510 may have been generated automatically by the cognitive services 281 or manually by a remote elevator mechanic 500 using an application 440.

At block 606, it is determined whether there are individuals 190 located in or on the conveyance apparatus using at least one of data 310 detected by a first detection device 492 or sound data 320 detected by a microphone 492. In an embodiment, it is determined whether there are individuals 190 located in or on the conveyance apparatus using only the data 310. In another embodiment it is determined whether there are individuals 190 located in or on the conveyance apparatus using only the sound data 320. In another embodiment, it is determined whether there are individuals 190 located in or on the conveyance apparatus using the data 310 and the sound data 320.

The method 600 may also comprise that the data 310 is detected using the first detection device 490. The first detection device 490 comprises at least one of a camera 490a, a depth sensing device 490b, a RADAR device 490c, or a thermal detection device 490d.

The method 600 may further comprise that the data 310 is transmitted to a cognitive service 281 via a cloud computing network 250 and the cognitive service processes the data 310.

At block 608, the software on the conveyance system is updated if it is determined that there are no individuals 190 located in or on the conveyance apparatus. The conveyance system may be required to cease operation during the software update. The conveyance apparatus may cease operation during the software update. For example, the elevator car 103 may have to stop moving during the software update, which is why it is important that the elevator car 103 is free from passengers during the update. If an object 192 is detected in the elevator car 103 and that object 192 is determined not to be an individual 190, then the software update may occur.

At 610, the software on the conveyance system is delayed, when it is determined that there is at least one individual 190 located in or on the conveyance apparatus.

While the above description has described the flow process of FIG. 3 in a particular order, it should be appreciated that unless otherwise specifically required in the attached claims that the ordering of the steps may be varied.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method of updating software on a conveyance system (101) comprising a conveyance apparatus (103), the method comprising:
receiving a software update request to update software on the conveyance system (101);
detecting data using a first detection device (490), wherein the first detection device (490) comprises at least one of a camera (490a), a depth sensing device (490b), a RADAR device (490c), a thermal detection device (490d), or a floor pressure sensor (490e);
detecting sound data using a microphone (492);
transmitting the data to a cognitive service (281);
processing the data using the cognitive service (281);
the cognitive service (281) determining whether there are individuals located in or on the conveyance apparatus (103) using the data detected by the first detection device (490) and the sound data detected by the microphone (492); and
updating the software on the conveyance system (101), when it is determined that there are no individuals located in or on the conveyance apparatus (103).

2. The method of claim 1, wherein the data is transmitted to the cognitive service (281) via a cloud computing network (250) or directly to the cognitive service (281).

3. The method of any preceding claim, further comprising:
detecting data using the first detection device (490),
determining that an object is located in or on the conveyance apparatus (103).

4. The method of any preceding claim, further comprising:
ceasing operation of the conveyance apparatus (103) prior to updating the software on the conveyance system (101).

5. The method of any preceding claim, wherein the conveyance system (101) is an elevator system (101) and the conveyance apparatus (103) is an elevator car (103).

6. The method of any preceding claim, wherein the software update request is received from a software repository (300) configured to generate the software update request automatically; and/or
wherein the software update request is received from an application installed on a computing device (400), wherein a remote elevator mechanic (500) entered the software update request using the application.

7. The method of any preceding claim, further comprising:
delaying updating the software on the conveyance system (101), when it is determined that there is at least one individual located in or on the conveyance apparatus (103).

8. A software updating system (200) for updating software on a conveyance system (101) comprising a conveyance apparatus (103), the software updating system (200) comprising:
a first detection device (490) configured to detect data, the first detection device (490) comprising at least one of a camera (490a), a depth sensing device (490b), a RADAR device (490c), a thermal detection device (490d) or a floor pressure sensor (490e);
a microphone (492) configured to detect sound data; and
a cognitive service (281) in communication with the first detection device (490), the cognitive service (281) configured to determine whether there are individuals located in or on the conveyance apparatus (103) using the data and the microphone (492);
wherein the software is updated on the conveyance system (101) when it is determined that there are no individuals located in or on the conveyance apparatus (103).

9. The software updating system of claim 8, wherein the conveyance system (101) is an elevator system (101) and the conveyance apparatus (103) is an elevator car (103).

10. The software updating system of claim 8 or 9, wherein the software on the conveyance system (101) is delayed when it is determined that there is at least one individual located in or on the conveyance apparatus (103).

11. A computer program product embodied on a non-transitory computer readable medium, the computer program product including instructions that, when executed by a processor of a software updating system according to any of claims 8 to cause the processor to perform operations comprising:
receiving a software update request to update software on the conveyance system (101);
detecting data using a first detection device (490), wherein the first detection device (490) comprises at least one of a camera (490a), a depth sensing device (490b), a RADAR device (490c), a thermal detection device (490d), or a floor pressure sensor (490e);
detecting sound data using a microphone (492);
transmitting the data to a cognitive service (281);
processing the data using the cognitive service (281);
the cognitive service (281) determining whether there are individuals located in or on the conveyance apparatus (103) using the data detected by the first detection device (490) and the sound data detected by the microphone (492); and
updating the software on the conveyance system (101), when it is determined that there are no individuals located in or on the conveyance apparatus (103).

## Patentansprüche

1. Verfahren zum Aktualisieren von Software auf einem Fördersystem (101), das ein Fördergerät (103) umfasst, wobei das Verfahren Folgendes umfasst:
Empfangen einer Software-Aktualisierungsanforderung zum Aktualisieren von Software auf dem Fördersystem (101);
Erfassen von Daten unter Verwendung einer ersten Erfassungsvorrichtung (490), wobei die erste Erfassungsvorrichtung (490) mindestens eines von einer Kamera (490a), einer Tiefenerkennungsvorrichtung (490b), einer RADAR-Vorrichtung (490c), einer thermischen Erfassungsvorrichtung (490d) oder einem Bodendrucksensor (490e) umfasst;
Erfassen von Tondaten unter Verwendung eines Mikrofons (492);
Übertragen der Daten an einen kognitiven Dienst (281);
Verarbeiten der Daten unter Verwendung des kognitiven Dienstes (281) ;
wobei der kognitive Dienst (281) unter Verwendung der durch die erste Erfassungsvorrichtung (490) erfassten Daten und der durch das Mikrofon (492) erfassten Tondaten bestimmt, ob sich Personen in oder auf dem Fördergerät (103) befinden; und
Aktualisieren der Software auf dem Fördersystem (101), wenn bestimmt wird, dass sich keine Personen in oder auf dem Fördergerät (103) befinden.

2. Verfahren nach Anspruch 1, wobei die Daten an den kognitiven Dienst (281) über ein Cloud-Computing-Netzwerk (250) oder direkt an den kognitiven Dienst (281) übertragen werden.

3. Verfahren nach einem der vorhergehenden Ansprüche, ferner umfassend:
Erfassen von Daten unter Verwendung der ersten Erfassungsvorrichtung (490),
Bestimmen, dass sich ein Objekt in oder auf dem Fördergerät (103) befindet.

4. Verfahren nach einem vorhergehenden Ansprüche, ferner umfassend:
Beenden des Betriebs des Fördergeräts (103) vor der Aktualisierung der Software auf dem Fördersystem (101).

5. Verfahren nach einem der vorhergehenden Ansprüche, wobei das Fördersystem (101) ein Aufzugssystem (101) ist und das Fördergerät (103) eine Aufzugskabine (103) ist.

6. Verfahren nach einem der vorhergehenden Ansprüche, wobei die Software-Aktualisierungsanforderung aus einem Software-Repository (300) empfangen wird, das konfiguriert ist, um die Software-Aktualisierungsanforderung automatisch zu generieren; und/oder
wobei die Software-Aktualisierungsanforderung aus einer auf einer Rechenvorrichtung (400) installierten Anwendung empfangen wird, wobei ein entfernter Aufzugsmechaniker (500) die Software-Aktualisierungsanforderung unter Verwendung der Anwendung eingegeben hat.

7. Verfahren nach einem der vorhergehenden Ansprüche, ferner umfassend:
Verzögern der Aktualisierung der Software auf dem Fördersystem (101), wenn bestimmt wird, dass sich mindestens eine Person in oder auf dem Fördergerät (103) befindet.

8. Software-Aktualisierungssystem (200) zum Aktualisieren von Software auf einem Fördersystem (101), das ein Fördergerät (103) umfasst, wobei das Software-Aktualisierungssystem (200) Folgendes umfasst:
eine erste Erfassungsvorrichtung (490), die konfiguriert ist, um Daten zu erfassen, wobei die erste Erfassungsvorrichtung (490) mindestens eines von einer Kamera (490a), einer Tiefenerkennungsvorrichtung (490b), einer RADAR-Vorrichtung (490c), einer thermischen Erfassungsvorrichtung (490d) oder einem Bodendrucksensor (490e) umfasst;
ein Mikrofon (492), das konfiguriert ist, um Tondaten zu erfassen; und
einen kognitiven Dienst (281), der mit der ersten Erfassungsvorrichtung (490) in Verbindung steht, wobei der kognitive Dienst (281) konfiguriert ist, um unter Verwendung der Daten und des Mikrofons (492) zu bestimmen, ob sich Personen in oder auf dem Fördergerät (103) befinden;
wobei die Software auf dem Fördersystem (101) aktualisiert wird, wenn bestimmt wird, dass sich keine Personen in oder auf dem Fördergerät (103) befinden.

9. Software-Aktualisierungssystem nach Anspruch 8, wobei das Fördersystem (101) ein Aufzugssystem (101) ist und das Fördergerät (103) eine Aufzugskabine (103) ist.

10. Software-Aktualisierungssystem nach Anspruch 8 oder 9, wobei die Software auf dem Fördersystem (101) verzögert wird, wenn bestimmt wird, dass sich mindestens eine Person in oder auf dem Fördergerät (103) befindet.

11. Computerprogrammprodukt, das auf einem nicht transitorischen computerlesbaren Medium umgesetzt ist, wobei das Computerprogrammprodukt Anweisungen beinhaltet, die bei Ausführung durch einen Prozessor eines Software-Aktualisierungssystems nach einem der Ansprüche 8 bis 10 den Prozessor veranlassen, Operationen durchzuführen, die Folgendes umfassen:
Empfangen einer Software-Aktualisierungsanforderung zum Aktualisieren von Software auf dem Fördersystem (101);
Erfassen von Daten unter Verwendung einer ersten Erfassungsvorrichtung (490), wobei die erste Erfassungsvorrichtung (490) mindestens eines von einer Kamera (490a), einer Tiefenerkennungsvorrichtung (490b), einer RADAR-Vorrichtung (490c), einer thermischen Erfassungsvorrichtung (490d) oder einem Bodendrucksensor (490e) umfasst;
Erfassen von Tondaten unter Verwendung eines Mikrofons (492);
Übertragen der Daten an einen kognitiven Dienst (281);
Verarbeiten der Daten unter Verwendung des kognitiven Dienstes (281) ;
wobei der kognitive Dienst (281) unter Verwendung der durch die erste Erfassungsvorrichtung (490) erfassten Daten und der durch das Mikrofon (492) erfassten Tondaten bestimmt, ob sich Personen in oder auf dem Fördergerät (103) befinden; und
Aktualisieren der Software auf dem Fördersystem (101), wenn bestimmt wird, dass sich keine Personen in oder auf dem Fördergerät (103) befinden.

## Revendications

1. Procédé de mise à jour de logiciel sur un système de transport (101) comprenant un appareil de transport (103), le procédé comprenant :
la réception d'une demande de mise à jour de logiciel pour mettre à jour le logiciel sur le système de transport (101) ;
la détection de données à l'aide d'un premier dispositif de détection (490), dans lequel le premier dispositif de détection (490) comprend au moins l'un d'une caméra (490a), d'un dispositif de détection de profondeur (490b), d'un dispositif RADAR (490c), d'un dispositif de détection thermique (490d), ou d'un capteur de pression au sol (490e) ;
la détection de données sonores à l'aide d'un microphone (492) ;
la transmission des données à un service cognitif (281) ;
le traitement des données à l'aide du service cognitif (281) ;
le service cognitif (281) déterminant s'il y a des individus situés dans ou sur l'appareil de transport (103) à l'aide des données détectées par le premier dispositif de détection (490) et les données sonores détectées par le microphone (492) ; et
la mise à jour du logiciel sur le système de transport (101), lorsqu'il est déterminé qu'il n'y a pas d'individus situés dans ou sur l'appareil de transport (103).

2. Procédé selon la revendication 1, dans lequel les données sont transmises au service cognitif (281) par l'intermédiaire d'un réseau informatique en nuage (250) ou directement au service cognitif (281).

3. Procédé selon une quelconque revendication précédente, comprenant en outre :
la détection de données à l'aide du premier dispositif de détection (490),
la détermination du fait qu'un objet est situé dans ou sur l'appareil de transport (103).

4. Procédé selon une quelconque revendication précédente, comprenant en outre :
l'arrêt du fonctionnement de l'appareil de transport (103) avant de mettre à jour le logiciel sur le système de transport (101).

5. Procédé selon une quelconque revendication précédente, dans lequel le système de transport (101) est un système d'ascenseur (101) et l'appareil de transport (103) est une cabine d'ascenseur (103).

6. Procédé selon une quelconque revendication précédente, dans lequel la demande de mise à jour de logiciel est reçue d'un référentiel logiciel (300) configuré pour générer automatiquement la demande de mise à jour de logiciel ; et/ou dans lequel la demande de mise à jour de logiciel est reçue en provenance d'une application installée sur un dispositif informatique (400), dans lequel un mécanicien d'ascenseur à distance (500) a entré la demande de mise à jour de logiciel à l'aide de l'application.

7. Procédé selon une quelconque revendication précédente, comprenant en outre :
le retardement de la mise à jour du logiciel sur le système de transport (101), lorsqu'il est déterminé qu'il y a au moins un individu situé dans ou sur l'appareil de transport (103).

8. Système de mise à jour de logiciel (200) pour mettre à jour un logiciel sur un système de transport (101) comprenant un appareil de transport (103), le système de mise à jour de logiciel (200) comprenant :
un premier dispositif de détection (490) configuré pour détecter des données, le premier dispositif de détection (490) comprenant au moins l'un d'une caméra (490a), d'un dispositif de détection de profondeur (490b), d'un dispositif RADAR (490c), d'un dispositif de détection thermique (490d) ou d'un capteur de pression au sol (490e) ;
un microphone (492) configuré pour détecter des données sonores ; et
un service cognitif (281) en communication avec le premier dispositif de détection (490), le service cognitif (281) étant configuré pour déterminer s'il y a des individus situés dans ou sur l'appareil de transport (103) à l'aide des données et du microphone (492) ;
dans lequel le logiciel est mis à jour sur le système de transport (101) lorsqu'il est déterminé qu'aucun individu ne se trouve dans ou sur l'appareil de transport (103).

9. Système de mise à jour de logiciel selon la revendication 8, dans lequel le système de transport (101) est un système d'ascenseur (101) et l'appareil de transport (103) est une cabine d'ascenseur (103).

10. Système de mise à jour de logiciel selon la revendication 8 ou 9, dans lequel le logiciel sur le système de transport (101) est retardé lorsqu'il est déterminé qu'il y a au moins un individu situé dans ou sur l'appareil de transport (103) .

11. Produit de programme informatique réalisé sur un support lisible par ordinateur non transitoire, le produit de programme informatique comportant des instructions qui, lorsqu'elles sont exécutées par un processeur d'un système de mise à jour de logiciel selon l'une quelconque des revendications 8 à 10, amènent le processeur à effectuer des opérations comprenant :
la réception d'une demande de mise à jour de logiciel pour mettre à jour le logiciel sur le système de transport (101) ;
la détection de données à l'aide d'un premier dispositif de détection (490), dans lequel le premier dispositif de détection (490) comprend au moins l'un d'une caméra (490a), d'un dispositif de détection de profondeur (490b), d'un dispositif RADAR (490c), d'un dispositif de détection thermique (490d), ou un capteur de pression au sol (490e) ;
la détection des données sonores à l'aide d'un microphone (492) ;
la transmission des données à un service cognitif (281) ;
le traitement de données à l'aide du service cognitif (281) ;
le service cognitif (281) déterminant s'il y a des individus situés dans ou sur l'appareil de transport (103) à l'aide des données détectées par le premier dispositif de détection (490) et des données sonores détectées par le microphone (492) ; et
la mise à jour du logiciel sur le système de transport (101), lorsqu'il est déterminé qu'il n'y a pas d'individus situés dans ou sur l'appareil de transport (103).
